# EUROPEAN PATENT SPECIFICATION

(11) **EP 4 682 621 B1**
(45) Date of publication and mention of the grant of the patent: **18.11.2026**
(21) Application number: 24306195.9
(22) Date of filing: 16.07.2024
(51) Int. Cl.: G02C 7/02, G02C 7/10

(54) **ARRAYS OF CHROMATIC LENSLETS COMBINATIONS FOR MYOPIA CONTROL**
ANORDNUNGEN AUS CHROMATISCHEN LINSENKOMBINATIONEN ZUR MYOPIESTEUERUNG
RÉSEAUX DE COMBINAISONS DE MICROLENTILLES CHROMATIQUES POUR LE CONTRÔLE DE LA MYOPIE

(43) Date of publication of application: 21.01.2026
(73) Proprietor: Essilor International, 94220 Charenton-Le-Pont (FR)
(72) Inventor: GACOIN, Eric, 75020 Paris (FR); GUILLOT, Matthieu, 92130 ISSY LES MOULINEAUX (FR); FERMIGIER, Bruno, 94700 MAISONS ALFORT (FR); BARANTON, Konogan, 75012 PARIS (FR)
(74) Representative: Cabinet Novitech

(56) References cited:
- WO-A1-2023/275189
- CN-U- 217 425 856
- US-A1- 2014 247 423
- US-A1- 2022 342 233
- US-A1- 2023 109 270

## Description

### TECHNICAL FIELD

The disclosure relates to optical lenses, and more particularly to optical lenses comprising sets of optical elements filtering specific ranges of wavelength of light.

### BACKGROUND

In recent years, there has been a rise in the development of solutions aimed at controlling the progression of abnormal refraction in the eye, such as myopia. One of the most promising solutions proposes to create a defocus in front of the retina that generates a myopia stop signal controlling the elongation of the eye and slowing down the progression of myopia. These new myopia control devices typically consist of lenses comprising microlenses that refract part of the light in front and/or behind of the retina of the eye of the wearer.

While the existing myopia control solutions have demonstrated high efficacy, they often come with a trade-off, as they may diminish the wearer's visual acuity and make the ophthalmic lenses less comfortable, particularly for the intended demographic of young individuals. Indeed, generating a defocus in front and/or behind the retina often leads to the generation of visual artifacts and decrease in contrast.

A recent study published in 2022 by Swiatczak and Schaeffel, "Myopia: why the retina stops inhibiting eye growth*"* has demonstrated that "focus in red" images have a beneficial impact on eye elongation, while "focus in blue" images have a bad impact. Another similar study "Chromatically simulated myopic blur counteracts a myopiagenic environment" published in 2022 by Gawne et al, has shown the advantage to blur the blue channel. Thus, it appears that Longitudinal Chromatic Aberrations (LCA) create signals that can have an important role on the abnormal refraction progression.

Longitudinal Chromatic Aberrations is known to be a natural cue that can drive accommodation with the involvement of long (L), mid (M), and short (S) cones. LCA occurs when different wavelength lights focus at different positions along the optical axis, i.e., focal length of longer wavelength lights is longer than that shorter wavelength lights. This difference between the focal length of long and short wavelength lights can induce a blur.

Lenses of the prior art combining light filtering and optical elements with different refractive powers are disclosed in CN117460984A.

The Inventors have observed that the LCA can be used as a cue by the eye to regulate its growth and to influence the progression of an abnormal refraction of the eye with a reduced impact on visual acuity and vision comfort.

Therefore, there is a need for a solution that can effectively stop, or at least decelerate the progression of abnormal refraction in the eye while preserving the wearer's optimal visual acuity.

### SUMMARY

To this end, the invention relates to an optical lens intended to be worn in front of an eye of a wearer, the optical lens comprising:
- a refractive area having at least a first refractive power based on a prescription adapted for the eye of the wearer,
- at least a first set of optical elements, each optical element of said first set of optical elements having at least a refractive power P_{B} different from the first refractive power, and comprising at least a red filtering function, the red filtering function reducing the transmittance of wavelengths of light greater than or equal to 550 nm, and
- at least a second set of optical elements, each optical element of said second set of optical elements having at least a refractive power P_{R} different from the first refractive power, and comprising at least a blue filtering function, the blue filtering function reducing the transmittance of wavelengths of light comprised between 380 nm and 500 nm.

Advantageously, the optical lens allows efficiently slowing down and reducing the progression of an abnormal refraction of an eye while maintaining better visual acuity and vision comfort for the wearer.

According to further embodiments which can be considered alone or in combination:
- the refractive power P_{B} of the optical elements of the first set of optical elements is greater than the refractive power P_{R} of the optical elements of the second set of optical elements; and/or
- the refractive power P_{B} of the optical elements of the first set of optical elements is positive and the refractive power P_{R} of the optical elements of the second set of optical elements is negative; and/or
- the refractive power P_{B} of the optical elements of the first set of optical elements is smaller than or equal to the refractive power P_{R} of the optical elements of the second set of optical elements; and/or
- the absolute value of the difference between the refractive power P_{B} and the refractive power P_{R} is greater than or equal to 2.5 D; and/or
- the plurality of optical elements are lenslets; and/or
- at least part of, for example more than 50%, preferably all, the optical elements are independent island shaped optical elements; and/or
- at least part of, for example all, the optical elements are aspherical optical elements; and/or
- at least part of, for example all, the optical elements are independent annular optical elements surrounding an island shaped refractive area; and/or
- the refractive area surrounded by the optical elements of the first set of optical elements comprises a red filtering function, the red filtering function reducing the transmittance of wavelengths greater than or equal to 550 nm; and/or
- the refractive area surrounded by the optical elements of the second set of optical elements comprises a blue filtering function, the blue filtering function reducing the transmittance of wavelengths comprised between 380 nm and 500 nm; and/or
- at least part of, for example more than 50%, preferably all, the optical elements are non-contiguous; and/or
- at least part of, for example more than 50%, preferably all, the optical elements are contiguous; and/or
- the first and second sets of optical elements are organized along a plurality of concentric rings; and/or
- the first set of optical elements are organized along a first plurality of concentric rings, the second set of optical elements are organized along a second plurality of concentric rings, all concentric rings having the same center, and the optical elements are organized over the optical lens so that the concentric rings alternate between a concentric ring of optical elements of the first set of optical elements and a concentric ring of optical elements of the second set of optical elements; and/or
- within each concentric ring of optical elements, optical elements alternate between a optical element of the first set of optical elements and a optical element of the second set of optical element; and/or
- the optical elements are at least partly covered by an anti-reflective coating providing the filtering functions; and/or
- the optical elements are at least partly tinted by a dye providing the filtering functions; and/or
- the optical lens is an electrochromic lens comprising an electroactive layer, the electroactive layer comprising electrochromic materials providing the filtering functions of the optical elements; and/or
- the optical elements are organized on at least one of, a front surface of the optical lens, a back surface of the optical lens, and in between a front surface and a back surface of the optical lens; and/or
- the optical lens comprises a central area having a diameter greater than or equal to 4 mm and smaller than or equal to 22 mm and including a framing reference point that faces the pupil of the wearer gazing straight ahead in standard wearing conditions, said central area being free of optical elements.

### BRIEF DESCRIPTION OF THE DRAWINGS

Embodiments of the invention will now be described, by way of example only, and with reference to the following drawings in which:
- Figure 1 illustrates a schematic front view of an optical lens according to an embodiment of the disclosure;
- Figures 2A to 2B illustrate schematic profile view of an optical lens according to embodiments of the disclosure;
- Figure 3 illustrates a schematic front view of an optical lens according to an embodiment of the disclosure;
- Figure 4 illustrates a schematic front view of an optical lens according to an embodiment of the disclosure; and
- Figures 5 illustrates schematic profile view of an electrochromic optical lens according to embodiments of the disclosure.

Elements in the figures are illustrated for simplicity and clarity and have not necessarily been drawn to scale. For example, the dimensions of some of the elements in the figure may be exaggerated relative to other elements to help to improve the understanding of the embodiments of the present invention.

### DETAILLED DESCRIPTION

In the reminder of the description, terms like « up », « bottom », « horizontal », « vertical », « above », « below », « front », « rear » or other words indicating relative position may be used. These terms are to be understood in the wearing conditions of the optical lens.

The disclosure relates to an optical lens intended to be worn in front of an eye of a wearer in specific wearing conditions, for example in standard viewing conditions.

In the context of the present disclosure, the term "optical lens" can refer to a contact lens or an ophthalmic lens or a spectacle optical lens edged to fit a specific spectacle frame or a progressive multifocal addition lens, an AR, VR, MR, or XR smart eyewear member that overlays or combines electronic display information with the optical lens, or an optical device adapted to be positioned on an ophthalmic lens. The optical device may be positioned on the front or back surface of the ophthalmic lens. The optical device may be an optical patch or film. The optical device may be adapted to be removably positioned on the ophthalmic lens for example a clip configured to be clipped on a spectacle frame comprising the ophthalmic lens.

The wearing conditions are to be understood as the position of the optical lens with relation to the eye of a wearer, for example defined by a pantoscopic angle, a wrap angle, a Cornea to lens distance, and eventually any of a Pupil-cornea distance, a center of rotation of the eye (CRE) to pupil distance, a CRE to lens distance and.

The Cornea to lens distance is the distance along the visual axis of the eye in the primary position (usually taken to be the horizontal) between the cornea and the back surface of the lens; for example comprised between 8 and 16 mm, preferably 10 and 14 mm, more preferably equal to 12mm.

The Pupil-cornea distance is the distance along the visual axis of the eye between its pupil and cornea; usually comprised between 1 and 4 mm, for example equal to 2mm.

The CRE to pupil distance is the distance along the visual axis of the eye between its center of rotation (CRE) and cornea; for example comprised between 10 and 15 mm, preferably 11 and 12 mm, more preferably equal to 11.5mm.

The CRE to lens Q'O distance is the distance along the visual axis of the eye in the primary position (usually taken to be the horizontal) between the CRE of the eye and the back surface of the lens, for example comprised between 20 and 30 mm, preferably 22.5 and 28 mm, more preferably equal to 25.5mm.

The pantoscopic angle is the angle in the vertical plane, at the intersection between the back surface of the lens and the visual axis of the eye in the primary position (usually taken to be the horizontal), between the normal to the back surface of the lens and the visual axis of the eye in the primary position; for example comprised between -25° and +5°, preferably -12° and 0°, more preferably between -10° and -6°, for example equal to -8°, preferably equal to 0°.

The wrap angle is the angle in the horizontal plane, at the intersection between the back surface of the lens and the visual axis of the eye in the primary position (usually taken to be the horizontal), between the normal to the back surface of the lens and the visual axis of the eye in the primary position for example comprised between -10° and +25°, preferably 0° and 10°, more preferably between 0° and +5°, for example equal to 0°.

An example of standard wearing condition may be defined by a pantoscopic angle of - 8°, a Cornea to lens distance of 12 mm, a Pupil-cornea distance of 2 mm, a CRE to pupil distance of 11.5 mm, a CRE to lens distance of 25.5 mm and a wrap angle of 0°.

Another example of standard wearing condition more adapted for younger wearers may be defined by a pantoscopic angle of 0°, a Cornea to lens distance of 12 mm, a Pupil-cornea distance of 2 mm, a CRE to pupil distance of 11.5 mm, a CRE to lens distance of 25.5 mm and a wrap angle of 0°.

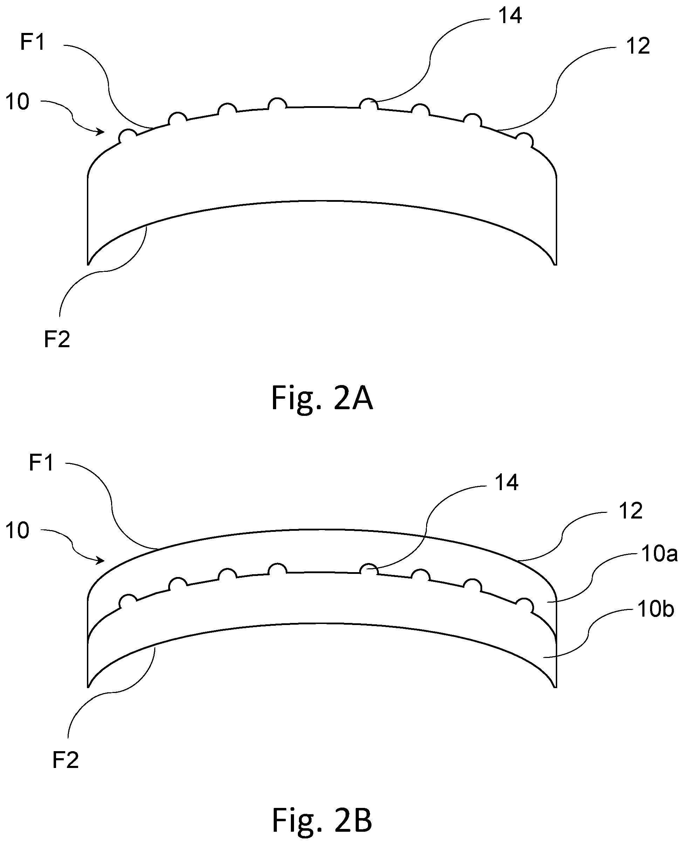

As illustrated in figure 2a, the optical lens 10 may comprise an object side surface F1 formed as a convex curved surface toward an object side. The optical lens may comprise an eye side surface F2 formed as a concave surface towards the eye of the wearer and opposed to the object side surface F1. Alternatively, the object side surface F1 and/or the eye side surface F2 may be any one of a plano surface, a convex surface, a concave surface, or a complex surface.

The optical lens 10 may be formed by a plurality of lens members put in close contact together. In the example illustrated in figure 2b, the optical lens 10 comprises a first lens member 10a comprising an object side surface F1 formed as a convex curved surface toward an object side and a complementary surface opposed to the object side surface. The optical lens may further comprise a second lens member 10b comprising an eye side surface F2 formed as a concave surface towards the eye of the wearer and a complementary surface opposed to the eye side surface. Both complementary surfaces of the first and second lens members 12a and 12b are designed to fit precisely into the other to ensure a tight and secure fit when the two lens member are brought together.

At least part, for example all, of the object side surface F1 and/or the eye side surface F2 of the optical lens may be covered by at least one layer of coating element. The at least one layer of coating element may comprise features selected from the group consisting of anti-scratch, anti-reflection, anti-smudge, anti-dust, UV30 filtration, blue light-filtration, anti-abrasion features. The layer of coating element may be provided using any known techniques. For example, the layer of coating may be provided using a dipping process where the optical lens simultaneously receives a layer of coating on each surface.

The optical lens may be made of any suitable material such as mineral material like glass, or organic material like plastic, resin. The index of refraction of the material used for the optical lens may be suitably selected to obtain targeted optical properties. Preferably, the index of refraction n of the holder is comprised between 1, 3 and 1.7 when measured for a wavelength of 550 nm. For example, the index of refraction n may be smaller than or equal to, or between any two of, 1.9; 1.8; 1.75; 1.73; 1.71; 1.69; 1.67; 1.65; 1.63; 1.61; 1.59; 1.57; 1.55; 1.54; 1.53; 1.52; 1.51; 1.50; 1.49; 1.48; 1.47; 1.46; 1.45; or lower, and/or greater than or equal to, or between any two of 1.1; 1.2; 1.25; 1.3; 1.31; 1.33; 1.35; 1.37; 1.39; 1.41; 1.43; 1.45; or higher. When the optical lens comprises a plurality of lens members, the indices of refraction of the material of the lens members may be different. Alternatively, the indices of refraction of the material of the lens members may be identical.

The object side surface F1 and/or the eye side surface F2 of the optical lens may have any suitable shape, such as spherical or non-spherical. The term "spherical shape" refers to the curvature of the lens surface, which closely follows the shape of a perfect or almost perfect sphere. A spherical surface has a substantially uniform curvature over the entire surface of the optical lens, which remains substantially the same in all meridians. A non-spherical surface should be understood as not being uniform over the entire surface of the optical lens, with different curvatures in different meridians.

The object side surface F1 and/or the eye side surface F2 of the optical lens may have a toric shape. A toric surface has two principal meridians that are perpendicular to each other, often referred to as the "steep" and "flat" meridians. The curvature of the surface in these meridians is different.

The object side surface F1 and/or the eye side surface F2 of the optical lens may have an aspherical shape. An aspherical surface has a curvature that progressively vary over the surface of the optical lens. The curvature along different meridians varies from the geometrical center of the optical lens towards the periphery, for example, the curvature of the surface increases or decreases towards the peripheral part of the surface. The shape of an aspherical surface is typically described using a mathematical equation, such as a conic section or a polynomial equation.

The object side surface F1 and/or the eye side surface F2 of the optical lens may have progressive addition lens profile. In the sense of the disclosure, a "progressive addition lens profile surface" should be understood as a surface comprising two areas having different spherical surface, and a third areas joining the two first areas, along which the curvature value of the surface transitions from the first the second curvature values of the corresponding two areas.

Alternatively, the object side surface F1 and/or the eye side surface F2 of the optical lens may have a plano shape. A plano surface has no curvature over the entire surface of the optical lens.

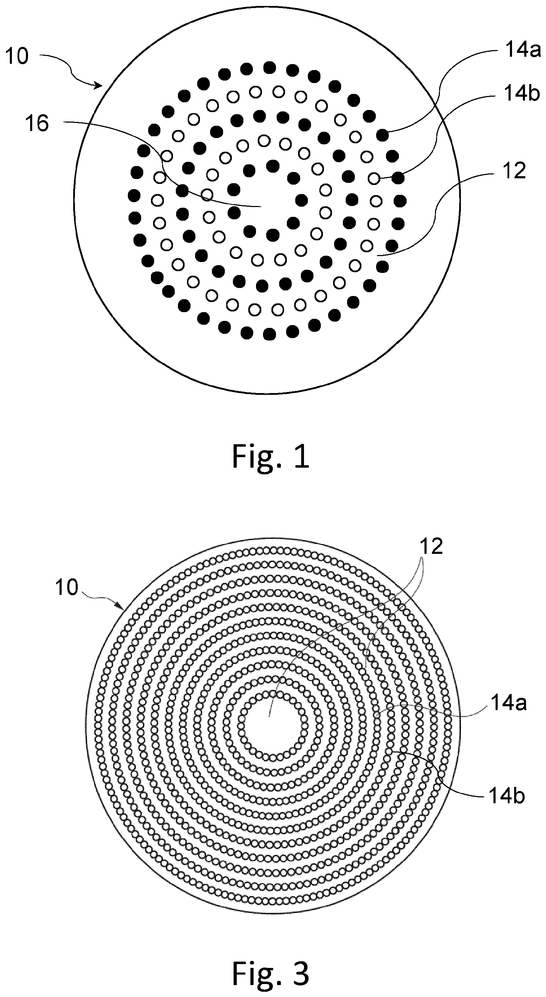

As illustrated in figure 1, the optical lens 10 intended to be worn in front of an eye of a wearer comprises a refraction area 12.

The refractive area 12 has at least a first refractive power based on a prescription adapted for the eye of the wearer. In the sense of the disclosure, a refractive power is to be understood as being measured for a wavelength of 550 nm. For example, the refractive area is adapted for a wearer according to a prescription to restore a presbyope's ability to see clearly at all distances, but also to optimally respect all physiological visual functions such as foveal vision, extra-foveal vision, binocular vision and to minimize unwanted astigmatisms.

For example, the first refractive power of the refractive area is configured to focalize incident light on the retina of the wearer, for example on the fovea of the eye of the wearer. **In** other words, when the wearer wearing the optical lens in standard wearing conditions looks straight ahead at an object located at infinity distance, at least part of incident light emitted by said object passing through the refractive area, will be focused on the retina, for example on the fovea, of the eye of said wearer.

The abnormal refraction of an eye of the wearer may be any of myopia, hyperopia, astigmatism, or presbyopia.

Advantageously, the first refractive power of the refractive area allows providing good visual acuity and good visual comfort to the wearer by correcting the defect of its eye.

The term "prescription" is to be understood to mean a set of optical characteristics of optical power, of astigmatism, of prismatic deviation, determined by an ophthalmologist or optometrist in order to correct the vision defects of the eye, for example by means of a lens positioned in front of his eye. For example, the prescription for a myopic eye comprises the values of optical power and of astigmatism with an axis for the distance vision. The prescription may comprise an indication that the eye of the wearer has no defect and that no refractive power is to be provided to the wearer.

At least part, for example all, of the refractive area may transmit light over the visible spectrum. In the sense of the disclosure, it should be understood that, for a light ray having a wavelength comprised between 380 nm and 750 nm that passes straight throughout the optical lens, the amount of light entering the optical lens through the refractive area is substantially the same as the amount of light exiting the optical lens. In other words, light having a wavelength comprised between 380 nm and 750 nm is not filtered by the refractive area. For the sake of clarity, the optical lens is described as a perfect optical system. However, a person skilled in the art understands that, even in a high transmittance optical system, a small amount, for example up to 10 or 20%, of light passing throughout it is usually dispersed, for example reflected or diffracted.

According to another embodiment of the disclosure, at least part, for example all, of the refractive area comprises at least a blue filtering function. The blue filtering function selectively reduces the transmittance of light within the blue portion of the visible spectrum, i.e., wavelength of light comprised between 380 nm and 500 nm. In other words, for a light ray having a wavelength comprised between 380 nm and 500 nm that passes straight throughout the optical lens, the amount of light entering the optical lens through the refractive area is significantly greater than the amount of light exiting the optical lens. For example, more than 50%, preferably more than 70%, even more preferably more than 80% of light passing throughout the refractive area is filtered by the blue filtering function.

As illustrated in figure 1, the optical lens 10 intended to be worn in front of an eye of a wearer comprises at least a first set of optical elements 14a and at least a second set of optical elements 14b. For the sake of clarity, the invention will be described with only two sets of optical elements. However, the invention is not limited to this embodiment and may comprise more than two sets of optical elements, for example any of, or in between, three, five, seven, nine or eleven sets of optical elements.

In the sense of the disclosure, the expression "set of optical elements" should be understood as a group of optical elements sharing common characteristics, such as for example a common shape and/or a common optical function.

The optical elements 14a and 14b of the first and second sets of optical elements are superimposed on the optical lens 10. In the sense of the disclosure, the expression "superimposed" should be understood as located on the front surface F1 of the optical lens and/or on the back surface F2 of the optical lens and/or between the front and back surfaces of the lens elements.

When the optical lens 10 is formed by a plurality of lens member, at least part of, preferably more than 50%, for example all, the optical elements of the sets of optical elements may be encapsulated within the optical lens. In the sense of the disclosure, "being encapsulated" should be understood as being surrounded, encased, protected in, or isolated from the outside of the lens element, as if in a capsule. In the embodiment illustrated in figure 2b, the optical elements are disposed on the complementary surface opposed to the eye side surface F2 of the lens member 10b. However, it should be understood that the plurality of optical elements may be disposed on any of the complementary surfaces opposed to the object side and/or the eye side surfaces F1 and F2 of the lens members 10a and 10b.

Advantageously, having the optical elements encapsulated within the optical lens allows protecting them. In addition, having the optical elements encapsulated allows facilitating lens surface treatments, for example the addition of coating layers such as abrasion resistance coating, UV filtration coating among others, without impacting the optical functions of the optical elements.

The optical elements of the sets of optical elements may be formed on the optical lens using any of the well-known manufacturing techniques of the prior art. For example, the optical elements may be engraved, imprinted, etched, or embossed directly on a surface of the optical lens.

The optical elements of the different sets of optical elements may be made of the same material as the one of the part of the optical lens on which they are superimposed. Alternatively, the optical elements and the part of the optical lens on which they are superimposed may be made of different materials. For example, when the optical elements are encapsulated between two lens members, the optical elements may be made of a same first material as the lens member on which they are disposed, and be different from the second material of the second lens member encapsulating said optical elements. Similarly, the optical elements of different sets of optical elements, for example the optical elements of the first and second sets of optical elements, may be made of the same material or made of different materials.

The optical elements may be transparent. In the sense of the disclosure, the expression "transparent" should be understood as not totally blocking the path of light as an opaque filter. The optical elements may have a concave shape, a convex shape, or a more complex shape, such as Fresnel rings or a grating structure.

Each of the optical elements may have a maximum height, e.g., measured in a direction orthogonal to the surface on which they are disposed, that is smaller than or equal to 1.0 millimeters (mm), such as, for example, less than or equal to or between any two of 0.9 mm, 0.8 mm, 0.7 mm, 0.6 mm, 0.5 mm, 0.4 mm, 0.3 mm, 0.2 mm, 0.1 mm, and greater than or equal to 1 micrometers (µm), such as, for example, more than or equal to or between any two of 5 µm, 10 µm, 20 µm, 30 µm, 40 µm, 50 µm, 60 µm, 70 µm, 80 µm, 90 µm, 100 µm. Typically, the average height of the optical element is comprised between 1 and 200 µm, preferably between 1 and 100 µm, more preferably between 1 and 50 µm.

Each of the optical element can have a diameter or a pitch that is less than or equal to 2.0 mm, such as, for example, less than or equal to or between any two of 5.0 mm, 2.0 mm, 1.5 mm, 1.0 mm, 0.5 mm, 0.1 mm, 80 µm, 60 µm, 40 µm, 20 µm, or smaller. For example, the diameter of the optical element is comprised between 0.1 mm and 5.0 mm, preferably between 0.25 mm and 4 mm, more preferably between 0.5 mm and 2.0 mm.

The optical elements of any set of optical elements may be lenslets. Lenslets have a contour shape circumscribed by a circle having a diameter smaller than or equal to 3.0 mm, for example smaller than or equal to 2.5mm, preferably smaller than or equal to 2.0mm, more preferably smaller than or equal to 1.5 mm, for example smaller than or equal to 1.0 mm. The lenslets may further be characterized by their largest inscribed circle that has a diameter greater than or equal to 0.1 mm, preferably greater than or equal to 0.2mm, more preferably greater than or equal to 0.4mm, even more preferably greater than or equal to 0.5mm, for example greater than or equal to 0.6 mm.

As represented in figure 1, at least part, for example more than 50%, preferably all, of the optical elements of the first and second sets of optical elements 14a and 14b may be non-contiguous.

For example, at least part, preferably at least 50%, more preferably all, of the optical elements may be independent island shaped optical elements. Independent island shaped optical elements are distanced from each other by a specific distance that may be fixed or may vary. For example the distance between adjacent island shaped optical elements may increase together with the distance between both optical elements and a geometrical center of the optical lens.

As represented in figure 3, at least part, for example more than 50%, preferably all, of the first and second sets of optical elements 14a and 14b may be contiguous.

In the sense of the disclosure, two optical elements located on a surface of the optical lens are contiguous if there is a path supported by said surface that links the two optical elements and if along said path one does not reach the basis surface of the optical lens on which the optical elements are superimposed.

When the surface on which the at least two optical elements are superimposed is spherical, the basis surface corresponds to said spherical surface. In other words, two optical elements superimposed on a spherical surface are contiguous if there is a path supported by said spherical surface and linking them and if along said path one may not reach the spherical surface.

When the surface on which the at least two optical elements are superimposed is non-spherical, the basis surface corresponds to the local spherical surface that best fits said non-spherical surface. In other words, two optical elements superimposed on a non-spherical surface are contiguous if there is a path supported by said non-spherical surface and linking them and if along said path one may not reach the spherical surface that best fit the non-spherical surface.

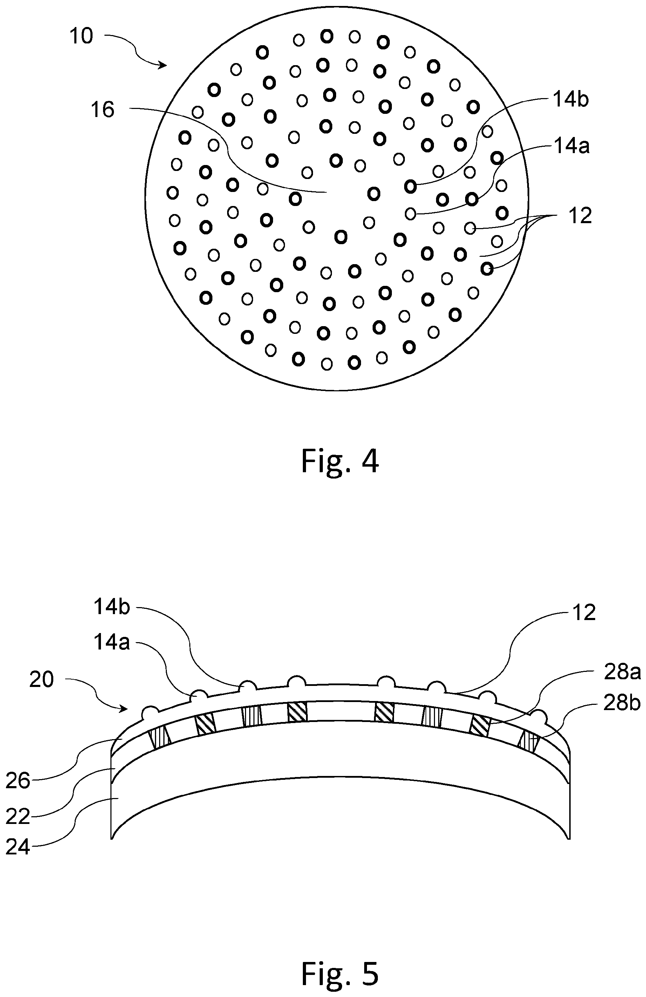

According to an embodiment of the disclosure illustrated in figure 4, at least part, preferably more than 50%, for example all, of the optical elements of at least one of the first and second sets of optical elements 14a and 14b may be independent annular optical elements. Each annular optical element surrounds part of the refractive area 12. Parts of the refractive area 12 are formed within the areas delimited by the annular shape optical elements, and thus have an island shape. In other words, the refractive area 12 of the optical lens 10 may comprise a plurality of respectively independent island-shaped areas.

Advantageously, such configuration provides a good repartition of the refractive area and optical elements thereby allowing to provide a better correction of the abnormal refraction of the eye of the wearer while maintaining the effective function of the optical elements to reduce, or at least slow down, the progression of said abnormal refraction.

At least part, preferably more than 50%, for example all, of the optical elements of at least one of the first and second sets of optical elements 14a and 14b may be π-Fresnel optical elements. In the sense of the disclosure π-Fresnel optical elements are Fresnel lenses whose phase function ψ(r) has π phase jumps at the nominal wavelength λ0, as opposed to unifocal Fresnel lenses whose phase jumps are multiple values of 2π. A π-Fresnel lenslet diffracts light mainly in two diffraction orders (order 0 and +1), for example associated to dioptric powers P(λ0) = 0 δ and a positive one P(λ0) = 3 δ, with λ0 = 550 nm.

Advantageously, π-Fresnel optical elements allow directing incident light towards two main planes, thereby providing two different optical functions.

For example, the diffraction order 0 of the π-Fresnel optical elements may associated with a first optical function of the optical elements based on a prescription of the wearer for correcting an abnormal refraction of an eye of said wearer, and the second diffraction order +1 of the π-Fresnel optical elements may be associated with a second optical function of the optical element of not focusing on the retina of the wearer.

At least part, preferably more than 50%, for example all, of the optical elements of at least one of the first and second sets of optical elements 14a and 14b may be independent. In the sense of the disclosure, two optical elements are considered independent if producing independent images. In particular, when illuminated by a parallel beam "in central vision", each "independent contiguous optical element" forms on a plane in the image space a spot associated with it. In other words, when one of the optical elements is hidden, the spot disappears even if this optical element is contiguous with another optical element.

The density of optical elements on the optical lens may be comprised between 20% and 100%. For example, for every circular zone having a radius comprised between 2 and 4 mm comprising a geometrical center located at a distance from the optical center of the optical lens greater than, or equal to, said radius + 5mm, the ratio between the sum of areas of the parts of optical microstructures located inside said circular zone and the area of said circular zone is comprised between 20% and 100%, preferably between 20% and 80%, more preferably between 30% and 70%, for example between 40% and 60%.

The optical elements 14 may be organized over an entire surface of the optical lens 10. In other words, the ratio between the sum of the projected areas of the optical elements and the area of the optical element is substantially equal to 1.

As illustrated in figure 1, the optical lens 10 may comprise a central area 16 having a diameter greater than or equal to 2.0 mm, preferably 3.0 mm, more preferably 4.0 mm and smaller than or equal to 40 mm, preferably 30mm, more preferably 22 mm, free of optical elements 14. The centra area including a framing reference point that faces the pupil of the wearer gazing straight ahead in standard wearing conditions.

The optical elements 14a of the first set of optical elements have at least a refractive power P_{B}. The refractive power P_{B} is different from the first refractive power of the refractive area 12. In the sense of the disclosure, two refractive powers are considered different when the difference, expressed in absolute terms, between the two refractive powers is greater than or equal to 0.5D.

The optical elements 14b of the second set of optical elements have at least a refractive power P_{R}. The refractive power P_{R} is different from the first refractive power of the refractive area 12. In the sense of the disclosure, two refractive powers are considered different when the difference, expressed in absolute terms, between the two refractive powers is greater than or equal to 0.5D.

Preferably, at least one of, for example both, the refractive powers P_{B} and P_{R} may be configured to not focus an image of an object on the retina of the eye of the wearer. Not focusing an image on the retina of the eye of the wearer should be understood as not creating a sharp image. In other words, the refractive power may provide a perturbated image, for example an image of reduced quality. When the wearer wears the optical lens, for example in standard wearing conditions, at least part of the incident rays of light passing through the optical elements of the first set of optical elements will not focus on the retina of the eye of the wearer. For example, the refractive power of the optical elements may direct incident rays of light passing through them towards a focus point located in front and/or behind the retina of the eye, or create a volume of defocused light other than on the retina of the eye.

According to an embodiment of the disclosure, at least one of, for example both, the refractive powers P_{B} and P_{R} of the optical elements may be configured to create a volume of focused or defocused light at a constant distance from the retina of the eye of the wearer. For example, optical elements may be configured to create a caustic in front of the retina of the eye of the wearer, so that every section plane where the light flux is concentrated if any, is located in front of the retina of the eye of the person and at a constant distance from the retina.

Advantageously, at least one of, for example both, the refractive powers P_{B} and P_{R} of the optical elements allows suppressing, reducing, or at least slowing down the development and the progression of an abnormal refraction of an eye of the person wearing the optical lens.

Having simultaneously a first refractive power correcting an abnormal refraction of an eye of the wearer and a refractive power slowing down the development of an abnormal refraction of an eye of the wearer allows limiting the development of an abnormal refraction, while also correcting it, thereby providing good visual acuity and visual comfort to the wearer.

The refractive powers of the optical lens are to be considered for a wearer wearing the optical lens, for example in standard wearing conditions, and looking straight ahead at a target object, preferably located at infinity, in central vision. However, it should be understood that the refractive power of the optical elements refers to the optical function of the optical elements itself and not the optical function of the combination of the optical elements and the optical lens on which they are superimposed. Preferably, the refractive powers of the optical lens are expressed for a wavelength of light of 550 nm. The eye of the wearer is preferably considered to be in an unaccommodated state when looking at an object located at infinity. However, a person of ordinary skill in the art would be able to use known accommodative response models to vary the accommodative state of the eye of the wearer according to the distance between the eye of the wearer and the object he or she is looking at.

According to an embodiment of the disclosure, the refractive power P_{B}, for example expressed in absolute terms, of the optical elements of the first set of optical elements 14a may be greater than the refractive power P_{R}, for example expressed in absolute terms, of the optical elements of the second set of optical elements 14b. Alternatively, the refractive power P_{B}, for example expressed in absolute terms, of the optical elements of the first set of optical elements 14a may be smaller than or equal to the refractive power P_{R}, for example expressed in absolute terms, of the optical elements of the second set of optical elements 14b.

The refractive powers P_{B} and P_{R} of the optical elements of the first sets of optical elements may be positive or negative.

According to an embodiment of the disclosure, the refractive power P_{B} of the optical elements of the first set of optical elements 14a may be positive and the refractive power P_{R} of the optical elements of the second set of optical elements may be negative. Alternatively, the refractive power P_{B} of the optical elements of the first set of optical elements 14a may be negative and the refractive power P_{R} of the optical elements of the second set of optical elements may be positive.

The difference, expressed in absolute terms, between the refractive power P_{B} of the optical elements of the first set of optical elements 14a and the refractive power P_{R} of the optical elements of the second set of optical elements 14b is greater than or equal to 1.0D, preferably greater than or equal to 2.5D.

At least part, for example more than 50%, preferably all, of the optical elements of the first set of optical elements 14a comprises at least a red filtering function. The red filtering function selectively reduces the transmittance of light within the red portion of the visible spectrum, i.e., wavelength of light greater than or equal to 550 nm, for example comprised between 550 nm and 750 nm. In other words, for a light ray having a wavelength greater than or equal to 550 nm, for example comprised between 550 nm and 750 nm, that passes straight throughout the optical lens, the amount of light entering the optical lens through the optical elements is significantly greater than the amount of light exiting the optical lens. For example, more than 50%, preferably more than 70%, even more preferably more than 80% of light passing throughout the optical elements is filtered by the blue filtering function.

At least part, for example more than 50%, preferably all, of the optical elements of the second set of optical elements 14b comprises at least a blue filtering function. The blue filtering function selectively reduces the transmittance of light within the blue portion of the visible spectrum, i.e., wavelength of light comprised between 380 nm and 500 nm. In other words, for a light ray having a wavelength comprised between 380 nm and 500 nm, that passes straight throughout the optical lens, the amount of light entering the optical lens through the optical elements is significantly greater than the amount of light exiting the optical lens. For example, more than 50%, preferably more than 70%, even more preferably more than 80% of light passing throughout the optical elements is filtered by the blue filtering function.

In the embodiment of the disclosure illustrated in figure 4, the optical elements of the first and second sets of optical elements 14a and 14b have an annular shape surrounding an island shaped refractive area 12.

The island shape refraction areas surrounded by the annular optical elements of the first set of optical elements 14a may comprise a red filtering function reducing the transmittance of wavelengths greater than or equal to 550 nm, for example comprised between 550 nm and 750 nm. The island shape refraction areas surrounded by the annular optical elements of the second set of optical elements 14b may comprise a blue filtering function reducing the transmittance of wavelengths comprised between 380 nm and 500 nm.

Advantageously, such configuration allows providing a stronger signal controlling the progression of the abnormal refraction of the eye of the wearer.

Alternatively, the island shape refraction areas surrounded by the annular optical elements of the first set of optical elements 14a may comprise a blue filtering function reducing the transmittance of wavelengths comprised between 380 nm and 500 nm. The island shape refraction areas surrounded by the annular optical elements of the second set of optical elements 14b may comprise a red filtering function reducing the transmittance of wavelengths greater than or equal to 550 nm, for example comprised between 550 nm and 750 nm.

Advantageously, such configuration allows reducing the impact on the visual acuity and vision comfort of the wearer.

The optical elements of the first and/or second sets of optical elements may be positioned on a structured mesh, for example a squared mesh or a hexagonal mesh or a triangle mesh or an octagonal mesh.

As illustrated in figure 1, the optical elements of the first and second sets of optical elements 14a and 14b may be organized in a plurality of concentric rings centered on an optical center and/or a geometric center of the optical lens 10 on which the optical elements are superimposed. The radial distance between successive concentric rings of optical elements may be identical. Alternatively, the radial distance between successive concentric rings of optical microstructures, may vary. Preferably, the distance between two successive concentric rings of optical microstructures is greater than or equal to 1.00 mm, preferably 2.0 mm, more preferably 4.0 mm. Optical elements may be arranged along radial lines, such as the spokes of a wagon wheel, or arranged in triangular, cubic, hexagonal, or other geometric mixed tiling cluster formations.

According to an embodiment of the disclosure illustrated in figure 1, the optical elements of the first set of optical elements 14a are organized along a first plurality of concentric rings, the second set of optical elements are organized along a second plurality of concentric rings, all concentric rings having the same center. The optical elements of the first and second sets of optical elements 14a and 14b are organized over the optical lens 10 so that the concentric rings of optical elements alternate between a concentric ring made of the optical elements of the first set and a concentric ring made of optical elements of the second sets.

Advantageously, such configuration allows providing a stronger effect controlling the progression of the abnormal refraction of the eye of the wearer.

According to an embodiment of the disclosure illustrated in figure 3, the optical elements of the first and second sets of optical elements 14a and 14b are organized along a plurality of concentric rings. Within each concentric ring of optical elements, optical elements alternate between an optical element of the first set of optical elements 14a and an optical element of the second set of optical elements 14b.

Advantageously, such configuration allows reducing the impact on the visual acuity and vision comfort of the wearer.

According to an embodiment of the disclosure, at least part, for example more than 50%, preferably all, of the optical elements of the first and second sets of optical elements 14a and 14b may be covered by an anti-reflective coating. The anti-reflective coating may cover parts or the entirety of an optical element. The anti-reflective coating covering the optical elements of the first sets of optical elements 14a has a higher reflection for wavelengths of light greater than or equal to 550 nm, for example comprised between 550 nm and 750 nm, thereby providing the red filtering function to the optical elements of the first set of optical elements. Similarly, the anti-reflective coating covering the optical elements of the second sets of optical elements 14b has a higher reflection for wavelengths of light comprised between 380 nm and 500 nm, thereby providing the blue filtering function to the optical elements of the first set of optical elements.

Advantageously, the anti-reflective coatings allow easily, accurately, and efficiently adding a filtering function to an optical lens. In other words, it allows improving the efficiency of the optical lens manufacturing process and allows customizing and adapting manufactured optical lenses.

According to another embodiment of the disclosure, at least part, for example more than 50%, preferably all, of the optical elements of the first and second sets of optical elements 14a and 14b may be tinted by dyes having specific absorption characteristics. The dyes may color parts or the entirety of an optical element. The dye tinting the optical elements of the first sets of optical elements 14a has a higher absorption for wavelengths of light comprised between 380 nm and 500 nm, thereby providing the red filtering function to the optical elements of the first set of optical elements. Similarly, the dye tinting the optical elements of the second sets of optical elements 14b has a higher absorption for wavelengths of light greater than or equal to 550 nm, for example comprised between 550 nm and 750 nm, thereby providing the blue filtering function to the refractive area.

Typically, the dyes may be applied to selectively tinting the optical elements of the optical lens using well-known techniques such as nidek tinting, sublimation tinting, inkjet tinting, monochromatic holography.

Advantageously, the dyes tinting allows accurately and efficiently adding a filtering function to an optical lens.

According to another embodiment of the disclosure illustrated in figure 5, the optical lens may be an electrochromic lens 20. The electrochromic lens 20 comprises at least one electroactive layer 22. The electroactive layer 22 may be embedded within the electrochromic lens 20, for example between a substrate 24 and a laminated film 26 carrying the refractive area 12 and the optical elements 14a and 14b. The electroactive layer 22 comprises at least a first set of electroactive cells spatially organized over the electrochromic lens 22 to match the pattern of optical elements 14a and 14b.

In the embodiment of the disclosure illustrated in figure 5, the electroactive layer 22 comprises two sets of electroactive cells, a first set of electroactive cells 28a comprising a first electroactive material and matching the organization of the optical elements of the first set of optical elements 14a, and a second set of electroactive cells 28b comprising a second electroactive material and matching the organization of the optical elements of the second set of optical elements 14b. The first and second electroactive material of the electrochromic cells preferably comprises electrochromic dyes that undergo reversible changes in optical properties by oxidation and/or reduction when a voltage is applied through an electrode of the electrochromic lens. For example, in a first state of activation, no voltage is applied through the electrode and the first and second materials are in a first activation state. In such first activation state, the dyes of the first and second electrochromic materials are uncolored and do not filter light. In a second state of activation, voltage is applied through the electrode and the first and second materials are in a second activation state. In such second activation state, the dyes of the first electrochromic material has a first color and provides the red filtering function of the optical elements of the first set of optical elements 14a, and the dyes of the second electrochromic material has a second color and provides the blue filtering function of the optical elements of the second sets of optical elements 14b.

Advantageously, such electrochromic lens allows easily controlling the functions of the optical lens, allowing to not activate the filtering functions in situations when the highest visual acuity in required for the wearer.

The optical elements of the first and/or second sets of optical elements may be spherical optical elements. For example at least part, for example more than 50%, preferably all of the optical elements are spherical optical elements. Spherical optical elements have a constant surface curvature, and thus a single refractive power configured to modify the direction of incident light beams to focus into a single focused point, preferably located in front and/or behind the retina of the wearer.

Alternatively, the optical elements of the first and/or second sets of optical elements may be non-spherical optical elements. For example, at least part, for example more than 50%, preferably all of the optical elements are non-spherical optical elements. Non-spherical optical elements do not have the same curvature and refractive power over their surface, and should be opposed to spherical optical elements which have a constant refractive power over their surface. Non-spherical optical elements modify the direction of incident light beams towards different focus points, thereby creating a blur or volume of non-focused light preferably in front and/or behind the retina of the wearer. In the sense of the disclosure, the term "non-spherical" should be understood as not having a single focus point.

The optical elements of the first and/or second sets of optical elements may be toric optical elements. For example at least part, for example more than 50%, preferably all of the optical elements are toric optical elements. Toric optical elements are typically characterized by a cylinder value and an orientation axis specifying the orientation of this cylindrical power. In other words, toric optical elements comprise two different refractive powers.

The optical elements of the first and/or second sets of optical elements may be atoric optical elements. For example at least part, for example more than 50%, preferably all of the optical elements are atoric optical elements. Atoric optical elements are characterized by a variation of refractive power along the different meridians.

The optical elements of the first and/or second sets of optical elements may be multifocal optical elements. In the sense of the disclosure, "multifocal optical elements" includes bifocals (with two focal powers), trifocals (with three focal powers), progressive addition lenses (with continuously varying focal power), for example aspherical, optical elements. For example at least part, for example more than 50%, preferably all of the optical elements are multifocal optical elements.

The optical elements of the first and/or second sets of optical elements may be aspherical optical elements. In the sense of the disclosure, aspherical optical elements are characterized by a continuous refractive power evolution over the surface. For example, the refractive power may increase, or decrease, from a geometrical or optical center to the periphery of the aspherical optical element.

For example at least part, for example more than 50%, preferably all of the optical elements of the first and/or second sets of optical elements are aspherical optical elements. An aspherical optical element may be characterized by a difference between the average mean refractive power measured in the central region of the optical element and the average mean refractive power measured in the peripheral region of the optical element comprised between 0.1D and 10D, preferably between 0.1D and 3D, in absolute value. The central region of an optical element may be defined by a circular area centered on the geometrical center of the optical element and having a diameter comprised between 0.1 mm and 0.5 mm, preferably equal to 0.2 mm. The peripheral region of the optical element may be defined by an annular zone centered on the geometrical center of the optical element and having an inner diameter comprised between 0.5 mm and 0.7 mm and an outer diameter comprised between 0.70 mm and 0.80 mm. According to an embodiment of the disclosure, the aspherical optical elements have a refractive power in their geometrical center comprised between 2.0D and 7.0D in absolute value, and a refractive power in their periphery comprised between 1.5D and 6.0D in absolute value. The values of the refractive power measured for the optical elements are to be considered in term of relative addition to the optical power of the holder on which said optical elements are superimposed.

According to an embodiment of the disclosure, the aspherical optical elements of the first and/or second sets of optical elements comprise a central region having an average mean refractive power equal to the second refractive power, a peripheral region having an average mean refractive power smaller than the second refractive power, and a contiguous variation of refractive power between the central region and the peripheral region.

According to an embodiment of the disclosure, the optical elements of the first and/or second sets of optical elements may be organized so that along at least one section of the optical lens, the average mean refractive power of the optical elements along said section varies towards the periphery of the myopia control device. For example, the average mean refractive power of the optical elements along the section may increase towards the periphery of the optical lens. Alternatively, the average mean refractive power of the optical elements along the section may decrease towards the periphery of the optical lens.

Advantageously, having the average mean refractive power of the optical elements varying according to the radial distance allows varying the defocus and by extension the intensity of the myopia control signal which lead to a better control of the development of the abnormal refraction of the eye.

According to another embodiment of the disclosure, the optical elements of the first and/or second sets of optical elements are organized so that along at least one section of the optical lens, the average mean refractive power of the optical element increases from a first point of said section to a second point, and further decreases from the second point towards the periphery of the optical lens, the second point being closer to the periphery of the optical lens than the first point.

According to another embodiment of the disclosure, the average mean refractive power of the optical elements of the first and/or second sets of optical elements may vary according to their radial distance, or eccentricity, from a geometrical center and/or an optical center of the surface of the optical lens on which they are superimposed. In other words, the average mean refractive power of an optical element located close to a geometrical or optical center of the optical lens may be higher than the average mean refractive power of an optical element located close to the periphery of the optical lens.

For example, the optical elements of the first and/or second sets of optical elements may be designed so that the average mean refractive power of the optical elements increases with the radial distance from a center of the optical lens up to a threshold distance, and further decrease with the radial distance past the threshold distance. For example, along a threshold distance smaller than or equal to 1.0 cm, preferably 2.0 cm, for example 3.0 cm, the average mean refractive power the optical elements increases with the radial distance, and for a threshold distance greater than 1.0 cm, preferably 2.0 cm, for example 3.0 cm, the average mean refractive power of the optical elements decreases with the radial distance.

The optical elements may be organized so that along all the sections passing through a geometrical center and/or an optical center of the optical lens, the average mean refractive power of the first and/or second sets of optical elements increases towards the periphery of the optical lens. Alternatively, the optical elements may be organized so that along all the sections passing through a geometrical center and/or an optical center of the optical lens, the average mean refractive power of the optical elements increases from a first point of the section to a second point of this section and further decrease from said second point towards the periphery of the optical lens, the second point being closer to the periphery of the optical lens than first point.

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

Many further modifications and variations will be apparent to those skilled in the art upon making reference to the foregoing illustrative embodiments, which are given by way of example only and which are not intended to limit the scope of the disclosure, that being determined solely by the appended claims.

**In** the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the disclosure.

## Claims

1. An optical lens intended to be worn in front of an eye of a wearer, the optical lens comprising:
- a refractive area having at least a first refractive power based on a prescription adapted for the eye of the wearer,
- at least a first set of optical elements, each optical element of said first set of optical elements having at least a refractive power P_{B} different from the first refractive power, and comprising at least a red filtering function, the red filtering function reducing the transmittance of wavelengths of light greater than or equal to 550 nm, and
- at least a second set of optical elements, each optical element of said second set of optical elements having at least a refractive power P_{R} different from the first refractive power, and comprising at least a blue filtering function, the blue filtering function reducing the transmittance of wavelengths of light comprised between 380 nm and 500 nm.

2. The optical element according to claim 1, wherein the refractive power P_{B} of the optical elements of the first set of optical elements is greater than the refractive power P_{R} of the optical elements of the second set of optical elements.

3. The optical lens according to claim 1, wherein the refractive power P_{B} of the optical elements of the first set of optical elements is smaller than or equal to the refractive power P_{R} of the optical elements of the second set of optical elements.

4. The optical lens according to any of claims 1 to 3, wherein at least part of, for example all, the optical elements are independent island shaped optical elements.

5. The optical lens according to any of claims 1 to 4, wherein at least part of, for example all, the optical elements are aspherical optical elements.

6. The optical lens according to any of claims 1 to 5, wherein at least part of, for example all, the optical elements are independent annular optical elements surrounding an island shaped refractive area.

7. The optical lens according to claim 6, wherein the refractive area surrounded by the optical elements of the first set of optical elements comprises a red filtering function, the red filtering function reducing the transmittance of wavelengths greater than or equal to 550 nm.

8. The optical element according to any of claims 6 or 7, where the refractive area surrounded by the optical elements of the second set of optical elements comprises a blue filtering function, the blue filtering function reducing the transmittance of wavelengths comprised between 380 nm and 500 nm.

9. The optical lens according to any of claims 1 to 8, wherein at least part of, for example all, the optical elements are non-contiguous.

10. The optical lens according to any of claims 1 to 8, wherein at least part of, for example all, the optical elements are contiguous.

11. The optical lens according to any of claims 1 to 10, wherein the first and second sets of optical elements are organized along a plurality of concentric rings.

12. The optical lens according to claim 11, wherein the optical elements of the first set of optical elements are organized along a first plurality of concentric rings, the optical elements of the second set of optical elements are organized along a second plurality of concentric rings, all concentric rings having the same center, and
wherein the optical elements are organized over the optical lens so that the concentric rings alternate between a concentric ring of optical elements of the first set of optical elements and a concentric ring of optical elements of the second set of optical elements.

13. The optical lens according to claim 11, wherein within each concentric ring of optical elements, optical elements alternate between an optical element of the first set of optical elements and an optical element of the second set of optical element.

14. The optical lens according to any of claims 1 to 13, wherein the optical elements are at least partly covered by an anti-reflective coating providing the filtering functions.

15. The optical lens according to any of claims 1 to 14, wherein the optical elements are at least partly tinted by a dye providing the filtering functions.

## Patentansprüche

1. Optische Linse, die dafür vorgesehen ist, vor einem Auge eines Trägers getragen zu werden, wobei die optische Linse Folgendes umfasst:
- einen Brechungsbereich mit wenigstens einer ersten Brechkraft basierend auf einer Verschreibung, die für das besagte Auge des Trägers eingerichtet ist;
- wenigstens einen ersten Satz optischer Elemente, wobei jedes optische Element des ersten Satzes optischer Elemente wenigstens eine Brechkraft P_{B} aufweist, die sich von der ersten Brechkraft unterscheidet, und wenigstens eine Rotfilterfunktion umfasst, wobei die Rotfilterfunktion den Transmissionsgrad von Lichtwellenlängen größer als oder gleich 550 nm reduziert, und
- wenigstens einen zweiten Satz optischer Elemente, wobei jedes optische Element des zweiten Satzes optischer Elemente wenigstens eine Brechkraft P_{R} aufweist, die sich von der ersten Brechkraft unterscheidet, und wenigstens eine Blaufilterfunktion umfasst, wobei die Blaufilterfunktion den Transmissionsgrad von Lichtwellenlängen zwischen 380 nm und 500 nm reduziert.

2. Optisches Element nach Anspruch 1, wobei die Brechkraft P_{B} der optischen Elemente des ersten Satzes optischer Elemente größer ist als die Brechkraft P_{R} der optischen Elemente des zweiten Satzes optischer Elemente ist.

3. Optische Linse nach Anspruch 1, wobei die Brechkraft P_{B} der optischen Elemente des ersten Satzes optischer Elemente kleiner als oder gleich der Brechkraft P_{R} der optischen Elemente des zweiten Satzes optischer Elemente ist.

4. Optische Linse nach einem der Ansprüche 1 bis 3, wobei wenigstens ein Teil, zum Beispiel alle, der optischen Elemente unabhängige inselförmige optische Elemente sind.

5. Optische Linse nach einem der Ansprüche 1 bis 4, wobei wenigstens ein Teil, zum Beispiel alle, der optischen Elemente asphärische optische Elemente sind.

6. Optische Linse nach einem der Ansprüche 1 bis 5, wobei wenigstens ein Teil, zum Beispiel alle, der optischen Elemente unabhängige ringförmige optische Elemente sind, die einen inselförmigen Brechungsbereich umgeben.

7. Optische Linse nach Anspruch 6, wobei der Brechungsbereich, der durch die optischen Elemente des ersten Satzes optischer Elemente umgeben ist, eine Rotfilterfunktion umfasst, wobei die Rotfilterfunktion den Transmissionsgrad von Wellenlängen größer als oder gleich 550 nm reduziert.

8. Optisches Element nach einem der Ansprüche 6 oder 7, wobei der refraktive Bereich, der durch die optischen Elemente des zweiten Satzes optischer Elemente umgeben ist, eine Blaufilterfunktion umfasst, wobei die Blaufilterfunktion den Transmissionsgrad von Wellenlängen reduziert, die zwischen 380 nm und 500 nm enthalten sind.

9. Optische Linse nach einem der Ansprüche 1 bis 8, wobei wenigstens ein Teil, zum Beispiel alle, der optischen Elemente nichtzusammenhängend sind.

10. Optische Linse nach einem der Ansprüche 1 bis 8, wobei wenigstens ein Teil, zum Beispiel alle, der optischen Elemente zusammenhängend sind.

11. Optische Linse nach einem der Ansprüche 1 bis 10, wobei der erste und der zweite Satz optischer Elemente entlang mehrerer konzentrischer Ringe organisiert sind.

12. Optische Linse nach Anspruch 11, wobei die optischen Elemente des ersten Satzes optischer Elemente entlang einer ersten Mehrzahl konzentrischer Ringe organisiert sind, die optischen Elemente des zweiten Satzes optischer Elemente entlang einer zweiten Mehrzahl konzentrischer Ringe organisiert sind, wobei alle konzentrischen Ringe den gleichen Mittelpunkt aufweisen, und
Wobei die optischen Elemente so über der optischen Linse organisiert sind, dass die konzentrischen Ringe zwischen einem konzentrischen Ring optischer Elemente des ersten Satzes optischer Elemente und einem konzentrischen Ring optischer Elemente des zweiten Satzes optischer Elemente abwechseln.

13. Optische Linse nach Anspruch 11, wobei innerhalb jedes konzentrischen Rings optischer Elemente sich optische Elemente zwischen einem optischen Element des ersten Satzes optischer Elemente und einem optischen Element des zweiten Satzes optischer Elemente abwechseln.

14. Optische Linse nach einem der Ansprüche 1 bis 13, wobei die optischen Elemente wenigstens teilweise durch eine Antireflexionsbeschichtung bedeckt sind, die die Filterfunktionen bereitstellt.

15. Optische Linse nach einem der Ansprüche 1 bis 14, wobei die optischen Elemente wenigstens teilweise durch einen Farbstoff eingefärbt sind, der die Filterfunktionen bereitstellt.

## Revendications

1. Lentille optique destinée à être portée devant un œil d'un porteur, la lentille optique comprenant :
- une zone réfractive ayant au moins une première puissance réfractive basée sur une prescription adaptée à l'œil du porteur,
- au moins un premier ensemble d'éléments optiques, chaque élément optique dudit premier ensemble d'éléments optiques ayant au moins une puissance réfractive P_{B} différente de la première puissance réfractive, et comprenant au moins une fonction de filtrage du rouge, la fonction de filtrage du rouge réduisant le facteur de transmission de longueurs d'onde de lumière supérieures ou égales à 550 nm, et
- au moins un deuxième ensemble d'éléments optiques, chaque élément optique dudit deuxième ensemble d'éléments optiques ayant au moins une puissance réfractive P_{R} différente de la première puissance réfractive, et comprenant au moins une fonction de filtrage du bleu, la fonction de filtrage du bleu réduisant le facteur de transmission de longueurs d'onde de lumière comprises entre 380 nm et 500 nm.

2. Élément optique selon la revendication 1, dans lequel la puissance réfractive P_{B} des éléments optiques du premier ensemble d'éléments optiques est supérieure à la puissance réfractive P_{R} des éléments optiques du deuxième ensemble d'éléments optiques.

3. Lentille optique selon la revendication 1, dans laquelle la puissance réfractive P_{B} des éléments optiques du premier ensemble d'éléments optiques est inférieure ou égale à la puissance réfractive P_{R} des éléments optiques du deuxième ensemble d'éléments optiques.

4. Lentille optique selon l'une quelconque des revendications 1 à 3, dans laquelle au moins une partie, par exemple la totalité des éléments optiques sont des éléments optiques en forme d'îlots indépendants.

5. Lentille optique selon l'une quelconque des revendications 1 à 4, dans laquelle au moins une partie, par exemple la totalité des éléments optiques sont des éléments optiques asphériques.

6. Lentille optique selon l'une quelconque des revendications 1 à 5, dans laquelle au moins une partie, par exemple la totalité des éléments optiques sont des éléments optiques annulaires indépendants entourant une zone réfractive en forme d'îlot.

7. Lentille optique selon la revendication 6, dans laquelle la zone réfractive entourée par les éléments optiques du premier ensemble d'éléments optiques comprend une fonction de filtrage du rouge, la fonction de filtrage du rouge réduisant le facteur de transmission de longueurs d'onde supérieures ou égales à 550 nm.

8. Élément optique selon l'une quelconque des revendications 6 et 7, dans lequel la zone réfractive entourée par les éléments optiques du deuxième ensemble d'éléments optiques comprend une fonction de filtrage du bleu, la fonction de filtrage du bleu réduisant le facteur de transmission de longueurs d'onde comprises entre 380 nm et 500 nm.

9. Lentille optique selon l'une quelconque des revendications 1 à 8, dans laquelle au moins une partie, par exemple la totalité des éléments optiques ne sont pas contigus.

10. Lentille optique selon l'une quelconque des revendications 1 à 8, dans laquelle au moins une partie, par exemple la totalité des éléments optiques sont contigus.

11. Lentille optique selon l'une quelconque des revendications 1 à 10, dans laquelle les premier et deuxième ensembles d'éléments optiques sont organisés le long d'une pluralité d'anneaux concentriques.

12. Lentille optique selon la revendication 11, dans laquelle les éléments optiques du premier ensemble d'éléments optiques sont organisés le long d'une première pluralité d'anneaux concentriques, les éléments optiques du deuxième ensemble d'éléments optiques sont organisés le long d'une deuxième pluralité d'anneaux concentriques, tous les anneaux concentriques ayant le même centre, et dans laquelle les éléments optiques sont organisés sur la lentille optique de telle sorte que les anneaux concentriques alternent entre un anneau concentrique d'éléments optiques du premier ensemble d'éléments optiques et un anneau concentrique d'éléments optiques du deuxième ensemble d'éléments optiques.

13. Lentille optique selon la revendication 11 dans laquelle, à l'intérieur de chaque anneau concentrique d'éléments optiques, les éléments optiques alternent entre un élément optique du premier ensemble d'éléments optiques et un élément optique du deuxième ensemble d'éléments optiques.

14. Lentille optique selon l'une quelconque des revendications 1 à 13, dans laquelle les éléments optiques sont au moins partiellement recouverts d'un revêtement antireflet assurant les fonctions de filtrage.

15. Lentille optique selon l'une quelconque des revendications 1 à 14, dans laquelle les éléments optiques sont au moins partiellement teintés par un colorant assurant les fonctions de filtrage.
